Europäisches Patentamt

European Patent Office

Office européen des brevets

(11) Publication number: **0 424 540 A1**

# EUROPEAN PATENT APPLICATION
## published in accordance with Art. 158(3) EPC

(21) Application number: 90906347.1

(22) Date of filing: 20.04.90

(86) International application number:
PCT/JP90/00519

(87) International publication number:
WO 90/12495 (01.11.90 90/25)

(51) Int. Cl.5: **A01G 25/00, A01G 27/00**

(30) Priority: 20.04.89 JP 46751/89 U

(43) Date of publication of application:
02.05.91 Bulletin 91/18

(84) Designated Contracting States:
**DE FR GB NL**

(71) Applicant: **KANEKO AGRICULTURAL MACHINERY CO., LTD.**
**21-10, Nishi 2-chome**
**Hanyu-shi, Saitama 348(JP)**

(72) Inventor: **KANEKO, Aijiro 1-15, Nishi 2-chome Hanyu-shi**
**Saitama 348(JP)**
Inventor: **KUDO, Masuji Kaneko Agricultural Machinery Co.,**
**Ltd. 21-10, Nishi 2-chome**
**Hanyu-shi Saitama 348(JP)**

(74) Representative: **Perani, Aurelio et al**
**c/o JACOBACCI-CASETTA & PERANI S.p.A 7,**
**Via Visconti di Modrone**
**I-20122 Milano(IT)**

(54) **PLANT GROWING APPARATUS.**

(57) This invention relates to a plant growing apparatus for supplying suitably a culture solution to a plurality of growing pots (7). This plant growing apparatus is equipped with an elongated trough-like storage tank (1) for storing the culture solution, a growing pot support table (3) for supporting the plurality of growing pots (7) arranged in the longitudinal direction of the tank (1) at a position higher than the level of the stored solution inside the tank (1) and level adjustment means for adjusting the level of the culture solution inside the tank (1). This level adjustment means consists of a communication path (6) for allowing the lower portion side inside the culture pot support table (3) to communicate with the lower portion side inside the tank (1), an air chamber (3a) formed and sealed on the upper portion side inside the growing pot support table (3) and air supply means (15, 18, 11, 9) for supplying air into this air chamber (3a). The level adjustment means may comprise an air tube (30) disposed expandibly and contractibly in the tank and air supply means (15, 18, 11, 9) for supplying air into this air tube (30).

**FIG.4**

# PLANT CULTIVATING SYSTEM

Field of the Invention

This invention relates to a plant cultivating system for supplying a plurality of cultivating pots with a culture liquid.

Background of the Invention

One of the conventional cultivating systems for supplying cultivating pots with a culture liquid is disclosed in Japanese Patent Publication No. 55-127930. This cultivating system comprises a water tank for storing a culture liquid and a pot supporting member disposed above the water tank for supporting cultivating pots thereon disposed above the water tank. The bottom part of the water tank and that of the pot supporting member communicate with each other by means of a pipe extending from above to below. An air chamber is defined in the upper part of the water tank. An air supplying apparatus for blowing air into the air chamber is installed at an appropriate place of the system.

In the known cultivating system constructed as above, the culture liquid stored in the tank is pushed up into the bottom part of the pot supporting member through the pipe by operating the air supplying apparatus. The cultivating pots are thereby supplied with the culture liquid from their bottom. When stopping the supply of the culture liquid, the liquid held in the bottom part of the pot supporting member is drained down back into the water tank through the pipe by releasing the air in the air chamber.

This system takes a relatively long time for the supply and withdrawal of the culture liquid because the liquid is supplied and withdrawn through the pipe extending upright between the water tank and the pot supporting member disposed above the water tank.

In the meantime, there are cases where it is required to maintain calture liquid supplying state continually or for a relatively long time, or to supply many cultivating pots with a culture liquid for a relatively short time and then quickly stop the supply of the liquid, depending on species of the plant to be grown or phase of growth. Thus the conventional cultivating system described above is not suitable to the plants from which a cultivating liquid must be quickly withdrawn after a short supply.

It is therefore an object of the present invention to provide a plant cultivating system which can properly tend plants which require a short supply and quick withdrawal of a culture liquid, as well as those which need to be put in the culture liquid supplying state continually or for a relatively long time.

Summary of the Invention

The above object is attained by the cultivating system of the present invention which comprises an elongated trough-like liquid vessel for storing a culture liquid therein, pot stands for supporting a plurality of cultivating pots thereon which are arranged along the elongated direction of the liquid vessel above the surface of the liquid, liquid level control means for raising or lowering the liquid level of the culture liquid in the liquid vessel.

In the above construction, the liquid in the vessel is moved upwardly to raise the surface of the liquid above the top of the stand by appropriately operating the liquid level control means. The pots placed on the stand can thus be quickly supplied with the liquid. The liquid supplying state can be maintained continually or for a relatively long time as necessary.

On the other hand, the liquid is moved downewardly to lower the liquid level below the top of the stand by appropriately operating the liquid level control means during the supplying state. The supply of the liquid can thereby be quickly stopped.

That is, by controlling the level of the liquid always stored in the liquid vessel by means of the liquid level control means, the liquid is held in the supplying state in which the liquid is supplied to many cultivating pots supported on the pot stand from their bottom or in the non-supplying state in which it is withdrawn from the pots. Thereby quick supply and withdrawal of the liquid are made possible as well as continual or relatively-long supply. The cultivating system of this invention thus can grow properly not only the plants which require continuous or relatively long supply of the cultivating liquid but also those plants which need short supply and quick withdrawal of the cultivating liquid.

The above liquid level control means may comprise a water-passages which connect the lower part of the inside of the pot stand and that of the liquid vessel, an air chamber defined by the upper part of the inside of the pot stand, and an air supply means for blowing air into the air chamber.

According to the liquid level control means constructed as above, air can be blown into the air chamber in each pot stand by operating the air supply means. Then the air pressure in the air chamber rises to push out the liquid stored in the lower part of the pot stand into the lower part of the liquid vessel through the passages. Thus the liquid level rises and the liquid is held in the supplying state in which the liquid is supplied to the pots supported on the pot stand from the bottoms thereof.

The liquid flows back into the bottom part inside the pot stand through the passages by releasing the air in the air chamber in the supplying state, whereby the surface of the liquid goes down and the liquid returns to the non-supplying state.

Further, the liquid level control means may comprise an elastic air tube which is inflatable and deflatable disposed in the liquid vessel and an air supply means for blowing air into the air tube.

Brief Description of the Drawings

Figure 1 shows a perspective view of an embodiment of the plant cultivating system according to the present invention, in which a part thereof is omitted;

Figure 2 shows a perspective view of a part of the above embodiment;

Figures 3 and 4 show an enlarged cross sectional view of the liquid vessel, in which a liquid non-supplying state is shown in Figures. 3 and a liquid supplying state is shown in Figures. 4, respectively;

Figure 5 shows a cross sectional view of the essential part of another embodiment; and

Figure 6 shows a perspective view of a cultivating facility using the plant cultivating system of the present invention.

Detailed Description of Preferred Embodiments

Preferred embodiments of the present invention are described below with reference to the accompanying drawings.

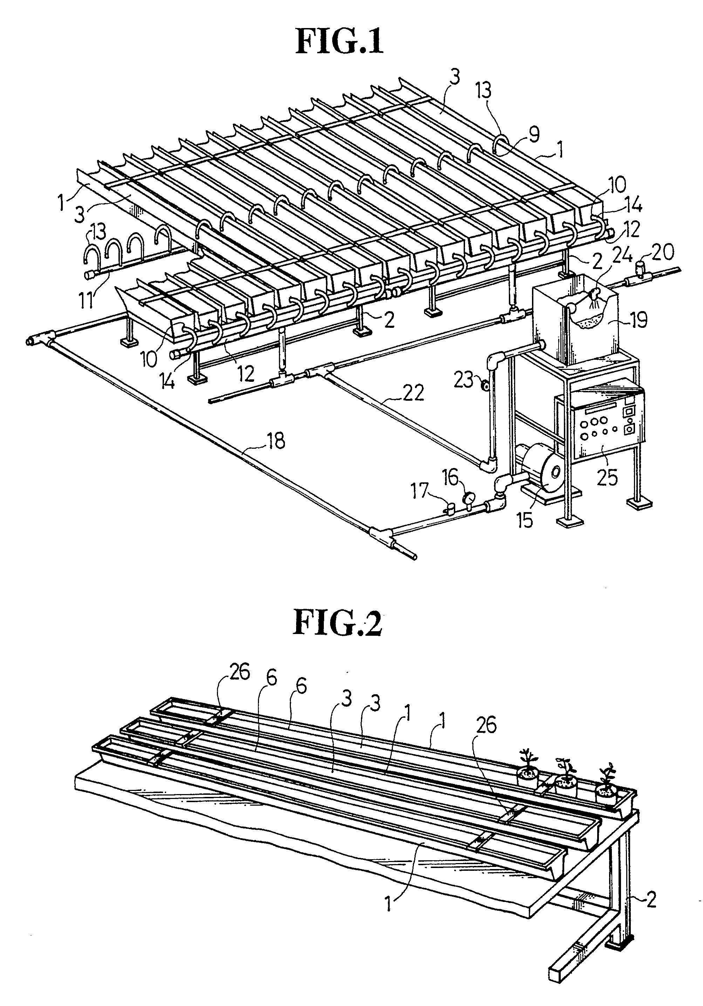

In Figures 1 to 4, the cultivating system includes a plurality of water vessels 1 for storing a culture liquid such as water therein. These vessels 1 are placed on a cultivating bench in parallel with each other. Each of the vessels 1 is formed so as to have an elongated, narrow trough-like shape. In the vessel 1, lower space 4 and upper space 5 are defined therein, and a liquid is always stored in the lower space 4.

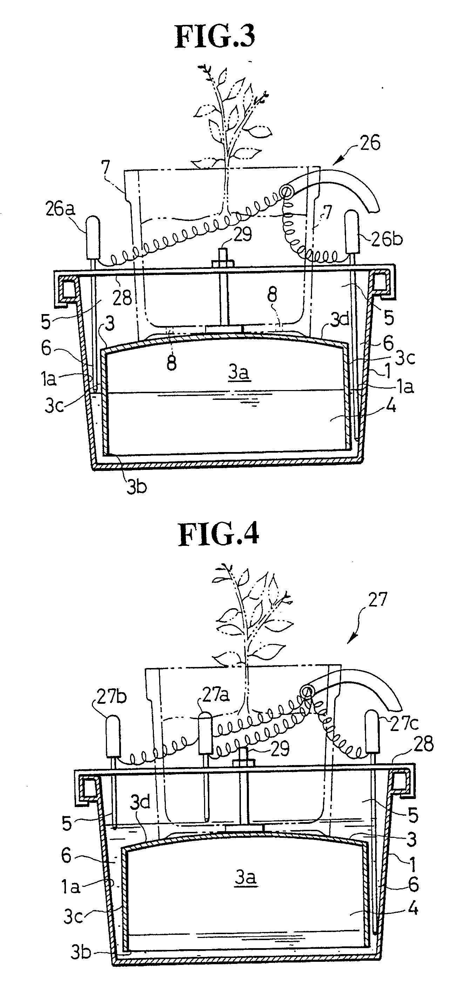

Detachably disposed in each vessel 1 is a pot stand 3 for supporting cultivating pots 7 along the length thereof. The pot stand 3 is in the shape of a box having a C-shped cross section and having the length slightly shoter than that of the water vessel 1. The width of the pot stand is narrower than that of the water vessel 1. Thus formed pot stand 3 is so arranged in the water vessel 1 that the opening 3b thereof faces the bottom of the water vessel 1 through a little space therebetween. As a result of this construction, an air chamber 3a is defined in the upper part of the inside of the pot stand 3. Further, the lower space inside the pot stand 3 and the lower space 4 of the water vessel 1 communicate with each other through the opening 3b of the pot stand 3. Furthermore, between each of the opposite inner surfaces 1a of the water vessel 1 and each of the outer side surfaces 3c of the pot stand 3, a narrow, water-supply passages 6 is defined, respectively. The opening 3b of the pot stand 3 and the water-supply passages 6 serve as the passage of the culture liquid. The pot supporting surface 3d of the pot stand 3, which is defined opposite to the opening 3d and on which pots are to be placed, is gently sloping from the center to both sides thereof as shown in Figures 3 and 4 so that the culture liquid drains quickly. A supply hole is formed in the bottom of each of the cultivating pots 7 to be supported on the pot stand 3.

An air supplying pipe 9 for blowing air into the air chamber 3a is attached to the upper surface 3d of the pot stand 3 as shown in Figure 1. A water supplying pipe 10 for storing water in the water vessel is attached to one end of the water vessel 1. The air supplying pipe 9 is connected to a pressurized air distribution pipe 11 by means of a flexible pipe 13 and the water inlet 10 are connected to a water distribution pipe 12 by means of a flexible pipe 14. Although the air supplying pipe 9 is opened into the air chamber, it may also be opened into the lower space inside the pot stand 3.

Installed near the bench 2 is a blower 15 which is connected to the pressurized air distribution pipe 11 by means of a pressurized air pipe 18. A pressure gauge 16 and a pressure control valve 17 are disposed on the pressurized air pipe 18. Installed above the blower 15 is a water tank 19 which is connected to a liquid source such as a public water supply through an electromagnetic valve 20. The water tank 19 is connected to the water distribution pipe 12 by means of a water pipe 22. A valve 23 is disposed on the water pipe 22 to make it possible to store a liquid in the water vessel 1 as necessary.

The water tank 19 is provided with a float valve 24 so as to keep the level of the liquid level in the water tank 19 constant. Then the amount of the liquid in the water vessel 1 can be kept constant. Further, a control unit 25 for controlling supply and withdrawal of a caltivating liquid and storage and draining of the caltivating liquid is located above the blower 25.

Disposed at an appropriate height in the water vessel 1 is a first liquid level detector 26 for detecting the state that the surface of the water in the water vessel 1 reaches the predetermined level in which the water vessel 1 stores sufficient caltivatng liquid therein.

The first liquid level detector 26 comprises a storage level sensor 26a and a common level sensor 26b. The tip of the storage level sensor 26a is positioned at the predetermined level up to which the liquid is normally to be stored. The common level sensor 26b serves as the ground. When the liquid in the water vessel 1 decreases below that level because of vaporization or leakage of the liquid, an electric current stops flowing between the storage level sensor 26a and the common level sensor 26b through the liquid. This causes the electromagnetic valve 20 to be opened by the control unit 25 and a liquid is supplied in the water vessel 1. When the surface of the liquid in the vessel reaches at the predetermined level and contact with the tip of the storage level sensor 26a, an electric current flows between the storage level sensor 26a and the common level sensor 26b to cause the electromagnetic valve to be closed. Thus the supply of the liquid to the water vessel 1 is stopped. The level of the liquid in the water vessel 1 is kept constant by repeating of the above operation.

Further, disposed at an appropriate height in the water vessel 1 is the second liquid level detector 27 for detecting the state that the surface of the liquid in the water vessel 1 reaches the predetermined upper or lower supply limit level. In order to maintain the sufficient supplying condition, the surface of the liquid must be held between the lower supply limit level in which the supply hole in the bottom of each cultivating pot 7 is positioned under the liquid surface and the upper supply limit level predetermined appropriately above the lower supply limit level.

The second liquid level detector 27 comprises an upper supply limit sensor 27a, a lower supply limit sensor 27b, and a common level sensor 27c. The tip of the upper supply limit sensor 27a is positioned at the predetermined upper supply limit level and that of the lower supply limit sensor at the predetermined lower supply limit level. The distance between the sensors 27a and 27b is about 3 mm in this embodiment. The common level sensor 27c serves as the ground in the same way as the common level sensor 26b.

In the above construction, while the surface of the liquid reaches the upper supply limit level while air is being blown into the air chamber 3a to raise the liquid level in the water vessel 1 and supply the plants in the pots with the liquid, an electric current starts flowing between the upper supply limit sensor 27a and the common level sensor 27c through the liquid. This causes the blower 15 to be stopped by the control unit 25 and air supply to the air chamber 3a is stopped. When the water level falls below the lower supply limit level as the air in the air chamber 3a is lost with lapse of time after the liquid being put into the supplying condition, an electric current stops flowing between the supply lower limit sensor 27b and the common level sensor 27c through the liquid. This causes the blower 15 to be operated by the control unit 25 to blow air into the air chamber 3a and the liquid level is raised again. By repeating the above operation, the supplying state can be maintained for any time.

Further, securing means 28 are attached on the top of the water vessel 1 near the front and rear ends. Each securing means 28 is equipped with an adjustment bolt 29 for holding the pot stand 3 as it is without floating up.

In the plant cultivating system constructed as above, plants in many cultivating pots 7 are grown with a nearly constant amount of water being stored in the water vessel 1 as shown in Figure 3.

When supplying liquid such as water to many pots 7 during the cultivation, the blower 15 is appropriately operated to blow pressurized air into the air chamber 3a in the pot stand 3 placed in the water vessel 1. Then the air pressure in the air chamber 3a rises to push out the liquid in the lower part of the inside of the pot stand 3 into the supply passages 6 through the opening 3b as shown in Figure 4. This raises the liquid level 1 above the pot stand 3 and the liquid is held in the supplying state in which it is supplied to the pots 7 through the supply hole 8 of each pot 7.

By releasing the air in the air chamber 3a through a valve (not shown in the drawings), the air pressure in the air chamber 3a decreases to move down the liquid back to the non-supplying state as shown in Figure 3. The liquid can be held in the supplying state continually or for relatively long time by keeping the air pressure in the air chamber 3a.

Control of the liquid level is made automatically by the control unit 25 as described above.

In the above embodiment, the liquid is put in the the supplying or non-supplying state by controlling the level of the liquid stored always in the water vessel 1 and thereby supply and withdrawal of the liquid to and from the pots can be made for a relatively short time. Therefore, this system can thus supply water to plants which require quick withdrawal of water after a relatively short supply as well as those which need continual or a relatively long supply of water.

Particularly by forming the supply passages 6 narrow, the liquid can be supplied and withdrawn for a relatively short time though the pot stand 3 extends long.

That is, the liquid level is quickly raised to cover the supporting surface of the pot stand 3 from both sides thereof toward the center all over the length of the pot stand by blowing air into the air chamber and quickly withdrawn the water by releasing the air in the air chamber 3a.

When withdrawing the liquid, the liquid drains down quickly because the supporting surface 3d of the pot stand 3 slopes gently from the center toward both sides.

Further in the above embodiment, since the liquid is put in the supplying or non-supplying state by controlling the liquid level in the water vessel 1 by means of the blower 15, it takes less energy to raise and lower the liquid level than the aforementioned known system. This system can thus save energy and cut cost.

Further in the above embodiment, since a pluratily of water vessels 1 are used and the culture liquid stored in each water vessel is supplied, the culture liquid does not circulate throgh the water vessels as it does in the known system. Thereby infection of diseases between the water vessels can be prevented.

The culture liquid may be water or water in which nutrients or drugs are dissolved. Further it is possible to control the temperature of the culture liquid.

Although the supply spaces 6 are formed at both sides of the pot stand 3 in the above embodiment, it is also possible to form one supply space 6 at one side of the pot stand 3.

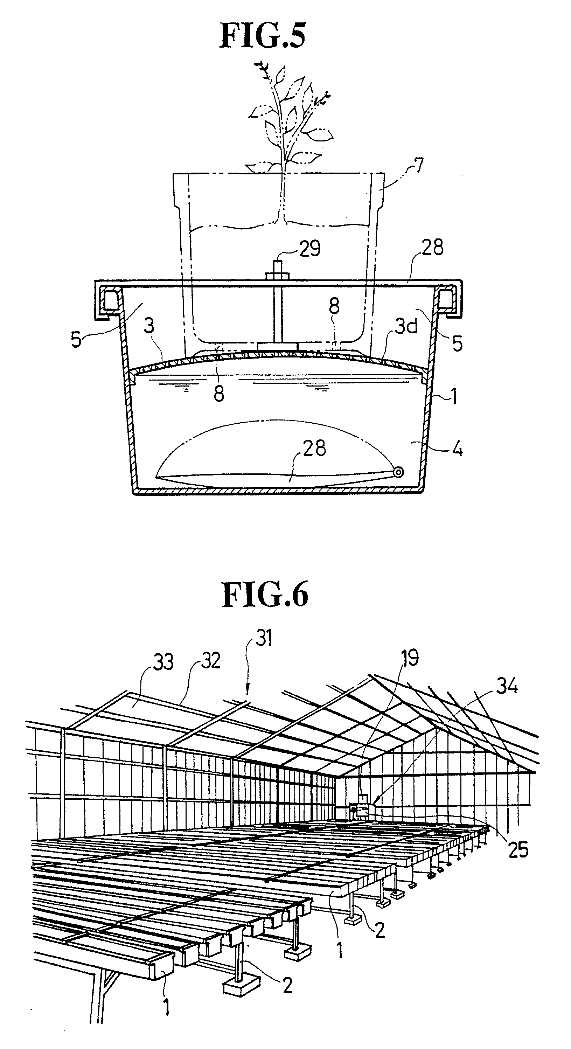

Figure 5 shows the second embodiment. In this embodiment, an inflatable air tube 30 is disposed in the water vessel 1 and the pot stand 3 is made of a material with water passages in many holes or mesh. The air tube 30 is connected to the pressurized air distribution pipe 11. This embodiment can also quickly raise and lower the level of the liquid stored in the water vessel 1 and attain the same objects as the first embodiment. The pot stand 3 of the same construction as in the first embodiment may also be used to place the inflatable air tube 30 in.

Figure 6 shows a cultivating facility in which many plant culitivating systems of the present invention are installed in the cultivating house 31. The cultivating house 31 is built with a frame 32 and a light-pervious material 33 supported on the frame 32 to admit sunlight. At an appropriate place in the cultivating house, the control unit 34 for automatically controlling blowing-in and release of air and supply and withdrawal of a cultivating liquid. Use of the cultivating system of the present invention in such a facility makes possible centralized control of the cultivating condition and a mass cultivation with saved energy and reduced labor.

As described above, the cultivating system of the present invention is useful for mass cultivation of flowers and other plants and trees with reduced labor by suppling and withdrawing a cultivating liquid to and from many cultivating pots. It can also be used for a water or other liquid supply system for supplying cattle with water or other liquid periodically or at any time as necessary.

## Claims

1. A plant cultivating system comprises:
a trough-like elongated vessel for storing a cultivating liquid therein;
a pot supporting means for supporting a plurality of cultivating pots thereon in the liquid vessel at the position above the surface of the cultivating liquid stored in the vessel; and
a liquid level control means for controlling the level of the cultivating liquid stored in the liquid vessel.

2. A plant cultivating system as claimed in claim 1, in which the liquid level control means comprises:
at least one liquid passag which connects the lower part of the inside of the pot supporting means and the lower part of the liquid vessel;
an air chamber defined in the upper part of the inside of the pot supporting means; and
an air supply means for blowing air into the air chamber.

3. A plant cultivating system as claimed in claim 1, in which the liquid level control means comprises:
an air tube which is inflatable and deflatable disposed in the liquid vessel; and
an air supply means for blowing air into the air tube.

4. A plant cultivating system as claimed in one of claims 1 to 3, further comprises a liquid storage means for supplying the liquid to the liquid vessel to store the liquid in the liquid vessel.

Application in Industry

# FIG.1

# FIG.2

# FIG.3

# FIG.4

# FIG.5

# FIG.6

# INTERNATIONAL SEARCH REPORT

International Application No  PCT/JP90/00519

**I. CLASSIFICATION OF SUBJECT MATTER** (if several classification symbols apply, indicate all) [6]

According to International Patent Classification (IPC) or to both National Classification and IPC

Int. Cl[5]    A01G25/00, A01G27/00

**II. FIELDS SEARCHED**

| Minimum Documentation Searched [7] | |
|---|---|
| Classification System | Classification Symbols |
| IPC | A01G25/00, A01G25/16, A01G27/00 |

| Documentation Searched other than Minimum Documentation to the Extent that such Documents are Included in the Fields Searched [8] |
|---|
| Jitsuyo Shinan Koho                  1933 - 1989 |
| Kokai Jitsuyo Shinan Koho        1972 - 1989 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, Y2, 55-32458 (Aiko K.K.), 2 August 1980 (02. 08. 80) | 1 |
| A | JP, A, 55-127930 (Koito Kogyo K.K.), 3 October 1980 (03. 10. 80), (Family: none) | 1 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure. use. exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| June 13, 1990 (13. 06. 90) | July 2, 1990 (02. 07. 90) |

| International Searching Authority | Signature of Authorized Officer |
|---|---|
| Japanese Patent Office | |

Form PCT ISA 210 (second sheet) (January 1985)